Europäisches Patentamt

European Patent Office

Office européen des brevets

(11) Numéro de publication: **0 251 967**
**B1**

(12) **FASCICULE DE BREVET EUROPEEN**

(45) Date de publication du fascicule du brevet:
**01.08.90**

(51) Int. Cl.⁵: **C21B 7/24**, G01B 11/27

(21) Numéro de dépôt: **87470011.5**

(22) Date de dépôt: **09.06.87**

(54) Procédé d'alignement axial d'un ensemble d'implantation d'une sonde parietale dans un four de fusion-réduction et ensemble d'implantation associé.

(30) Priorité: **27.06.86 FR 8609393**

(43) Date de publication de la demande:
**07.01.88 Bulletin 88/1**

(45) Mention de la délivrance du brevet:
**01.08.90 Bulletin 90/31**

(84) Etats contractants désignés:
**AT BE DE ES GB IT LU NL SE**

(56) Documents cités:
**FR-A- 2 275 789**
**US-A- 3 700 901**

**PATENT ABSTRACTS OF JAPAN,**
**vol. 7, no. 7 (C-161)[1231], 9 avril 1983; &**
**JP-A-58 16 005 (SHIN NIPPON SEITETSU**
**K.K.) 29-01-1983**
**PATENT ABSTRACTS OF JAPAN,**
**vol. 10, no. 52 (P-432)[2109], 28 février 1986; &**
**JP-A-60 195 408 (HITACHI SEISAKUSHO**
**K.K.) 03-10-1985**

(73) Titulaire: **INSTITUT DE RECHERCHES DE LA**
**SIDERURGIE FRANCAISE (IRSID), Voie Romaine**
**B.P. 64, F-57210 Maizières-lès-Metz(FR)**

(72) Inventeur: **Daverio, Jean-Claude, 7, rue Henry de Jeslin,**
**F-57050 Ban-Saint-Martin(FR)**
Inventeur: **Grein, Frédéric, 8, rue Bellevue,**
**F-57110 Illange(FR)**

(74) Mandataire: **Ventavoli, Roger, IRSID B.P. 64 Voie**
**Romaine, F-57210 Maizières-lès-Metz(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé d'alignement axial d'un ensemble d'implantation d'une sonde pariétale dans un four de fusion-réduction, tel qu'un haut-fourneau. Elle concerne également les moyens utilisés pour réaliser cet alignement.

Il existe plusieurs procédés de sondage dans des fours de fusion-réduction, et en particulier on peut citer les sondages à introduction sensiblement verticale de la sonde par l'ouverture supérieure du four, et les sondages à introduction sensiblement horizontale par un orifice ménagé dans la paroi du four.

Le choix du procédé est essentiellement déterminé par le but du sondage. Par exemple, en prenant le cas d'un sondage dans un haut-fourneau, si l'on s'intéresse plus particulièrement aux conditions de température ou de pression au niveau de la partie haute de la cuve, on choisit de préférence une introduction par le haut, où l'accès par le gueulard est plus aisé. Par contre, si l'intérêt se porte sur les caractéristiques au niveau du creuset ou des étalages, on préférera une introduction pariétale.

Dans le cas d'une introduction pariétale, la sonde formée par un corps rectiligne alongé est poussée à l'intérieur du four par un orifice réalisé au travers de la paroi extérieure du four et du revêtement réfractaire intérieur. Afin de limiter les pertes thermiques et d'éviter la détérioration de la paroi au voisinage de l'orifice, celui-ci est de préférence de faible diamètre. Dans les cas particulier du haut-fourneau, le passage pour la sonde est avantageusement déterminé par l'orifice des tuyères de soufflage du vent et le diamètre de la sonde n'est que légèrement plus petit que celui de cet orifice.

Par ailleurs, du fait des hautes températures régnant à l'intérieur du four, et des gaz nocifs sous pression qui s'y trouvent, il est nécessaire d'assurer l'étanchéité de l'orifice, autant lorsque la sonde est introduite, que lorsqu'elle est retirée. Cette étanchéité est assurée par des dispositifs de type connu comportant généralement une vanne, ou autre organe d'obturation, qui est fermée hors période de sondage, associée avec une presse-étoupe dont la garniture enserre la sonde lorsque celle-ci traverse axialement le dispositif d'étanchéité, la vanne étant alors ouverte.

Le dispositif d'étanchéité peut comporter des accessoires complémentaires. En particulier il peut être relié à la paroi entourant l'orifice, par un compensateur de dilatation, qui absorbe les différences de déformation entre des éléments soumis aux hautes températures du four, tout en assurant l'étanchéité entre la paroi et la vanne ou le presse-étoupe.

Du fait de l'épaisseur de la paroi et de la longueur du dispositif d'étanchéité, la sonde doit être guidée le plus précisément possible pour passer sans difficultés dans l'orifice. Pour cela, la sonde est maintenue d'une part au niveau du presse-étoupe, où elle est guidée par le presse-étoupe lui-même ou par un dispositif adéquat, et d'autre part, par un banc d'introduction qui supporte la partie de ladite sonde non encore introduite dans le four et qui est réglable en hauteur et en inclinaison selon la verticale et en azimut.

Ce banc sert à la fois de support et de guide pour la sonde, et de dispositif de poussée pour assurer la pénétration de ladite sonde dans le four. La poussée est transmise à la sonde par un chariot guidé en translation sur la longueur du banc et entraîné par des organes moteurs.

Un banc d'introduction pour une sonde pariétale est par example décrit dans la demande de brevet français de Nippon Steel publié sous le numéro n°2472018 et un dispositif d'étanchéité est décrit dans le brevet français de DANGO et DIENENTHAL Maschinenbau publié sous le numéro 2471413.

Les sondes utilisées dans les fours sont généralement de forme tubulaire, à paroi refroidie et peuvent contenir divers appareillages de mesure ou de prélèvement. Leur longueur dépend de la profondeur à laquelle on veut les introduire dans le four, et de la longueur du dispositif d'étanchéité. Pour une pénétration jusqu'à l'axe d'un haut-fourneau moderne, la longueur de la sonde peut dépasser 10 mètres. La longueur totale de l'ensemble d'implantation est donc importante et peut avoisiner 20 mètres.

Du fait de ces grandes longueurs, du faible diamètre de l'orifice et de celui de la sonde (par exemple moins de 100mm) et de l'effort de poussée, la sonde a tendance à se cintrer par flambement. De plus, du fait du "porte-à-faux" qui peut être important entre le point de support du corps de sonde sur le banc ou sur le dispositif d'étanchéité et l'orifice dans la paroi du four, l'extrémité du nez de la sonde risque de s'écarter de l'axe de l'orifice.

Dans certains cas, il peut se produire en outre des déplacements de la paroi extérieure du four par rapport au revêtement réfractaire intérieur, ce qui risque de modifier la position relative de l'orifice dans le réfractaire par rapport au dispositif d'étanchéité qui est lié à la paroi extrérieure.

On conçoit alors que non seulement la sonde doit être fermement maintenue et guidée sur le banc et sur le dispositif d'étanchéité, mais encore que les axes de ceux-ci et de l'orifice soient parfaitement alignés.

La présente invention a pour but de répondre à ces exigences et d'assurer une introduction aisée d'une sonde pariétale dans un four de fusion-réduction, tel qu'un haut-fourneau.

Un autre but est d'éviter le contact et le frottement de la sonde sur le pourtour de l'orifice d'introduction.

Un autre but encore est d'éviter la déformation de la sonde par cintrage ou flexion.

Avec ces objectifs en vue, l'invention a pour objet un procédé d'alignement axial d'un ensemble d'implantation d'une sonde pariétale allongée rectiligne dans un four de fusion-réduction par un orifice dans la paroi dudit four, l'ensemble d'implantation comprenant un dispositif d'étanchéité selon l'axe duquel la sonde doit progresser pour pénétrer dans le four, ledit dispositif d'étanchéité étant réglable en position au voisinage de l'axe de l'orifice de la paroi et comportant un organe d'obturation assurant l'étanchéité lorsque la sonde est retirée. Et un organe d'étanchéité assurant celle-ci lorsque la sonde est introduite, l'ensemble d'implantation comprenant aussi un banc pour assurer l'avance et la pénétration de la sonde dans le four, ce banc, pourvu de moyens de réglage en hauteur et en inclinaison verticale, comportant un chariot porte-sonde mobile en translation selon l'axe de ladite sonde.

Selon l'invention le procédé est caractérisé en ce qu'on place tout d'abord une lunette de visée sur le dispositif d'étanchéité et coaxialement avec celui-ci; on vise l'orifice du four; on règle la position du dispositif d'étanchéité pour faire coïncider l'axe de visée avec celui de l'orifice ; on remplace ensuite la lunette de visée par une source émettrice d'un rayon lumineux, également axée sur le dispositif d'étanchéité et dirigée vers le banc d'introduction de la sonde sur une mire prévue sur le chariot, centrée sur l'axe de la sonde; on déplace le chariot sur le banc et on règle la position dudit banc de façon que, quelle que soit la position du chariot sur le banc, le rayon lumineux atteigne la mire en son centre.

Un avantage principal du procédé selon l'invention est qu'il permet de réaliser aisément un alignement précis des dispositifs d'étanchéité et d'entraînement (banc) de la sonde sur l'axe de l'orifice de la paroi du four.

Un autre avantage est que ce procédé permet de réaliser indépendamment le positionnement du dispositif d'étanchéité et celui du banc. En particulier on peut régler le dispositif d'étanchéité une fois pour toutes, et puis se servir de celui-ci comme référence pour aligner le banc pour des opérations de sondage successives entre lesquelles le banc peut être déplacé, par example éloigné pour libérer les abords du four.

Dans une réalisation particulière de l'invention, le procédé est caractérisé en ce que l'organe d'obturation étant fermé, on fixe la lunette de visée de façon étanche sur le dispositif d'étanchéité à son extrémité la plus éloignée du four, et en ce qu'on ouvre ensuite l'organe d'obturation pour effectuer la visée de l'orifice.

Dans ce cas, on peut facilement réaliser l'alignement du dispositif d'étanchéité, même lorsque le four est en fonctionnement et contient des gaz à hautes températures ou nocifs.

L'invention permet de positionner avec précision et en toute sécurité le dispositif d'étanchéité, et le banc, malgré la sévérité des conditions ambiantes.

L'utilisation d'une source de rayons lumineux pour l'alignement du banc apporte également une simplification dans les opérations de réglage, puisque la source reste fixe, et que les réglages du banc sont faits à l'endroit où se trouve le chariot et la mire, et donc à l'endroit où, pour l'opérateur, il est aisé de centrer la mire sur le rayon lumineux, celle-ci se trouvant alors proche de lui et bien visible.

Un autre objet de l'invention est un ensemble d'implantation d'une sonde pariétale allongée rectiligne dans un four de fusion-réduction, cet ensemble comprenant un dispositif d'étanchéité selon l'axe duquel la sonde doit progresser pour pénétrer dans ledit four, et comportant un organe d'obturation assurant l'étanchéité lorsque la sonde est retirée, et un organe d'étanchéité assurant celle-ci lorsque la sonde est introduite, ledit ensemble d'implantation comprenant également un châssis fixé rigidement à la paroi du four et supportant le dispositif d'étanchéité, et un banc pourvu d'un chariot porte-sonde mobile en translation selon l'axe de ladite sonde.

Selon l'invention, cet ensemble d'implantation comporte des moyens de réglage de la position du dispositif d'étanchéité par rapport au châssis, des moyens de réglage de la position en hauteur du banc et de son orientation spatiale et des moyens pour positionner et fixer temporairement sur, ou à proximité, du dispositif d'étanchéité et coaxialement avec celui-ci, une lunette de visée optique ou une source émettrice d'un rayon lumineux.

Avantageusement, le banc est solidarisé au châssis par des attaches articulées.

Un avantage de l'ensemble d'implantation conforme à l'invention réside dans le fait que les moyens de réglage du dispositif d'étanchéité d'une part et du banc d'autre part, peuvent être actionnés indépendamment les uns des autres offrant ainsi une grande souplesse dans la réalisation des manipulations de réglage.

D'autres particularités et avantages de l'invention apparaîtront dans la description qui va être faite d'un mode particulier de réalisation, en liaison avec les dessins annexés dans lesquels :

- la figure 1 est une représentation schématique d'un ensemble d'implantation d'une sonde,

- les figures 2 et 3 sont des schémas illustrant les deux étapes du procédé d'alignement.

- la figure 4 est une représentation schématique d'un système de réglage du dispositif d'étanchéité, vu suivant l'axe du dispositif,

- la figure 5 est une représentation d'un système de réglage du banc, vu suivant l'axe de la sonde,

- la figure 6 est une représentation schématique d'une liaison réglable banc-dispositif d'étanchéité, vue par le dessus.

L'exemple qui va être décrit est celui de l'implantation d'une sonde par l'orifice 3, d'axe 35, d'une tuyère 31 destinée classiquement au soufflage du vent dans un haut fourneau siderurgique 4. On a représenté en 32 le busillon et en 34 le porte-vent amenant le vent depuis la conduite circulaire (non représentée). La paroi du haut-fourneau est constituée d'un blindage extérieur métallique 45 et d'un revêtement intérieur réfractaire 46. Le dispositif d'étanchéité 2 est relié de façon étanche au busillon 32 par l'intermédiaire d'un manchon de dilatation 33 qui peut se déformer, autorisant ainsi une certaine mobilité du dispositif d'étanchéité.

Ce dispositif d'étanchéité, d'axe longitudinal 26, comporte une vanne 21 qui est fermée et assure l'étanchéité lorsque la sonde est retirée hors du dispositif et un presse - étoupe 22 dont la garniture enserre la sonde de manière étanche , dès que celle-ci est introduite dans le dispositif. De ce fait, l'étanchéité est encore assurée et on peut ouvrir la vanne pour poursuivre l'introduction de la sonde dans le four.

Le dispositif d'étanchéité 2 est supporté par l'intermédiaire de deux systèmes de réglage 42 sur un châssis 41 fixé rigidement sur le blindage 45 du haut-fourneau.

Le banc 6 de support et de poussée de la sonde 1 est constitué de deux longerons parallèles 65 formant rail de guidage pour un chariot 61 d'entraînement de la sonde 10. Ce chariot est mû par un système de chaînes entraînées par des moteurs hydrauliques, non représentées. Le banc repose sur un chemin de roulement 7 sur le plancher du haut-fourneau par l'intermédiaire de supports 63 réglables en hauteur, fixés sur des chariots 66.

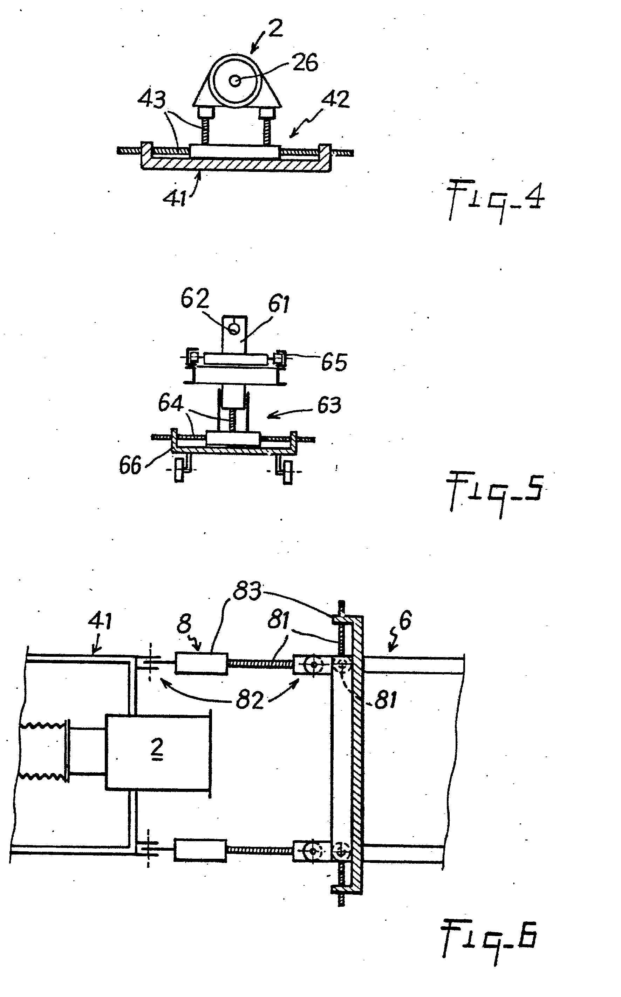

Le banc est arrimé au châssis 41 par des attaches 8 comportant des articulations 82, du type à cardan par exemple, permettant un déplacement angulaire relatif du banc par rapport au châssis (figure 6). Deux systèmes de réglage 83 sont réglables dans les trois directions, c'est-à-dire selon l'axe de la sonde, et, perpendiculairement à cet axe, horizontalement et sensiblement verticalement. Grâce à ces systèmes d'articulation et de réglage, on a la possibilité de régler le banc suivant toutes les directions et toutes les positions angulaires.

Les attaches 8 permettent de transmettre au blindage 45 du haut-fourneau l'effort de réaction à la poussée pour l'introduction de la sonde,auquel est soumis le banc. Grâce à l'agencement de ces attaches, et de leur système de réglage 83, placées de chaque côté du châssis, l'effort de réaction s'applique axialement ce qui évite, en cas d'effort important, tout risque de déformation et désalignement de l'ensemble.

Les supports 66 du banc (figure 5) comportent des systèmes de réglage 63 qui agissent selon deux directions orthogonales entre elles ; verticalement et horizontalement dans une direction perpendiculaire à l'axe 62 de la sonde. Ces supports sont répartis sur la longueur du banc afin d'éviter sa flexion du fait de sa grande longueur. Un support 66 est placé à proximité de chaque extrémité du banc et un ou plusieurs supports intermédiaires soutiennent la partie médiane. Ainsi qu'on le verra dans la suite de la description, en ce qui concerne le procédé d'alignement, ces supports réglables permettent de positionner avec précision le banc à l'aplomb du point auquel ils sont placés.

Les systèmes de réglage 42 du dispositif d'étanchéité 2 agissent également dans les directions verticale et horizontale, perpendiculairement à l'axe 26 du dispositif. Ces systèmes de réglage 42 sont espacés entre eux et possèdent une certaine liberté d'articulation de façon à pouvoir déplacer le dispositif d'étanchéité horizontalement et verticalement, mais aussi angulairement par rapport à l'axe 35 de l'orifice 3 de la tuyère.

Les systèmes de réglage 42,63,83 du dispositif d'étanchéité 2, du banc 6 et des attaches 8 sont tous de préférence, des systèmes à vis 43,64,81 et ils peuvent être manuels ou motorisés.

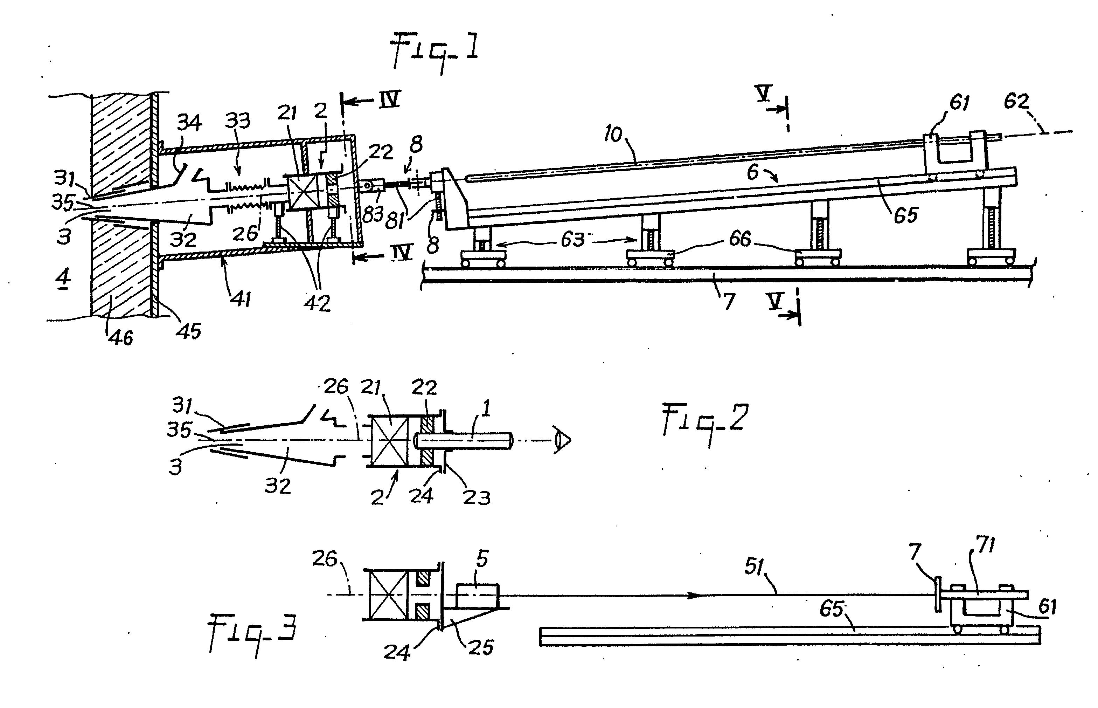

Afin de pouvoir procéder à l'alignement de l'ensemble d'implantation, des supports et dispositifs de fixation sont prévus pour les appareillages d'alignement sur le dispositif d'étanchéité 2 d'une part, et sur le chariot porte-sonde 61 d'autre part. A cette fin, le dispositif d'étanchéité est pourvu d'une bride annulaire 24. Sur cette bride peut venir se centrer et se fixer de manière étanche soit une plaque 23 porte-lunette de visée 1 (figure 2), soit une console 25 pour le support de la source 5 de rayon lumineux, de type laser (figure 3). D'autres moyens de centrage et de liaison peuvent être envisagés, le seul impératif étant la localistion coaxiale précise de l'appareil utilisé (lunette et laser) avec le dispositif d'étanchéité. En particulier, et si les conditions internes au haut-fourneau le permettent, on peut placer la lunette de visée optique 1 dans le presse-étoupe en veillant à adapter leurs diamètres respectifs pour conserver une bonne étanchéité.

D'autre aprt, la mire 7, nécessaire à l'alignement du banc au laser, et fixée et centrée en bout d'une "fausse-sonde" 71, constituée d'une pièce de forme et dimensions similaires à la partie d'entraînement de la sonde fixée au chariot 61, et qui peut donc s'adapter sur ce chariot de façon que le centre de la mire soit placé sur l'axe de la sonde.

On va maintenant décrire le procédé d'alignement des différentes parties de l'ensemble d'implantation. L'alignement est réalisé en deux phases principales qui sont : alignement de l'axe 26 du dispositif d'étanchéité 2 sur l'axe 35 de l'orifice 3 de la tuyère, puis alignment de l'axe 62 du chariot 61 (qui est également l'axe de la sonde, une fois montée) sur l'axe 26 du dispositif d'étanchéité. Pour aligner le dispositif d'étanchéité, on place vers son extrémité la plus éloignée du haut-fourneau, une lunette de visée optique, munie éventuellement des filtres adéquats pour viser la partie très chaude du haut-fourneau, selon un des modes de centrage et de fixation décrits ci-dessus. Lorsque l'étanchéité est assurée, on ouvre la vanne 21. On peut alors regarder à travers la lunette et viser l'orifice 3 de la tuyère du haut-fourneau. On règle alors la position et l'orientation de la lunette, et donc du dispositif d'étanchéité, grâce aux systèmes de réglage 42, de façon à centrer exactement l'orifice 3 dans le viseur de la lunette. Les différentes vis de réglage 43 sont alors bloquées. On ferme ensuite la vanne 21 et on retire la lunette et son support, que l'on remplace par la console 25 portant la source laser 5, le faisceau du laser étant dirigé vers le banc 6, suivant l'axe du dispositif d'étanchéité.

Le banc 6 est approché et relié au châssis 41 par ses attaches réglables 8. La mire 7 fixée sur la fausse sonde 71 est mise en place sur le chariot 61, et celui-ci est approché près d'une extrémité du banc 6, par exemple celle qui est la plus proche de la source lumineuse 5, et positionné juste à l'aplomb du premier support réglable 63 à partir du haut-fourneau. On ajuste alors les systèmes de réglage 63 dudit support et, le cas échéant, ceux 83 des attaches 8 du banc 6 au châssis 41, de façon à faire coïncider le centre de la mire 7 avec le point lumineux formé sur ladite mire par le rayon lumineux 51.

On déplace alors le chariot 61 à l'autre extrémité du banc et on règle de même les supports 63 correspondants. Puis on amène le chariot à l'aplomb de chaque support intermédiaire, pour y faire les réglages nécessaires. Les réglages des supports intermédiaires servent à corriger les défauts de rectitudes du banc, ceux-ci étant principalement dûs à la flexion des longerons 65 du fait de leur grande longueur.

Il peut être nécessaire, pour parfaire l'alignement, de réajuster une ou plusieurs fois les différents systèmes de réglage. Un contrôle final peut être exécuté en déplaçant de façon continue le chariot d'un bout à l'autre du banc, et en vérifiant le centrage du rayon laser sur la mire.

On dépose ensuite la mire, le laser et son support, avant de mettre en place la sonde et de procéder à son introduction dans le four ou le haut-fourneau.

Il va de soi que l'invention ne se limite pas à l'exemple décrit mais s'étend à de multiples variantes ou équivalents dans la mesure où sont respectées les caractéristiques énoncées dans les revendications jointes.

Ainsi, les attaches 8 reliant le banc au châssis 41 peuvent être remplacées par des cales placées sur le chemin de roulement 7, pour empêcher le recul du banc lors de l'"introduction de la sonde.

De même, l'utilisation d'une source laser 5, quoique avantageuse, n'est pas obligatoire. Une source émettrice d'un faisceau de lumière même non cohérente mais suffisamment confiné pour obtenir une tache lumineuse non diffuse sur la mire, peut parfaitement faire l'affaire.

De même, il faut entendre, par axe 35 de l'orifice 3, non pas obligatoirement la droite passant par le centre de cet orifice et en tout point de laquelle celui-ci est vu sous un angle solide maximum, mais aussi la famille de droites formant un faisceau autour de celle-ci et depuis lesquelles cette ouverture est vue sous un angle solide définissant une section de passage suffisante pour l'introduction de la sonde dans le four. Pratiquement, on alignera la lunette sur la droite de ce faisceau qui passe par le centre de l'ouverture arrière du busillon 32 non représentée sur les figures.

**Revendications**

1. Procédé d'alignement axial d'un ensemble d'implantation d'une sonde pariétale (10) allongée rectiligne dans un four (4) de fusion-réduction tel qu'un haut-fourneau par un orifice (3) dans la paroi dudit four, l'ensemble d'implantation comprenant un dispositif d'étanchéité (2) selon l'axe duquel la sonde doit pénétrer dans le four, ledit dispositif d'étanchéité étant réglable en position et comportant un organe d'obturation (21) assurant l'étanchéité lorsque la sonde est retirée, et un organe d'étanchéité (22) assurant celle-ci lorsque la sonde est introduite, l'ensemble d'implantation comprenant également un banc (6) pour assurer l'avance et la pénétration de la sonde dans le four, ce banc présentant des moyens de réglage en hauteur et en inclinaison (63, 64) et portant un chariot porte-sonde (61), mobile en translation selon l'axe (62) de ladite sonde, caractérisé en ce qu'on place une lunette de visée (1) sur le dispositif d'étanchéité (2) et coaxialement avec celui-ci pour faire coïncider l'axe (26) dudit dispositif avec l'axe de visée ; on vise l'orifice (3) du four (4) ; on règle la position du dispositif d'étanchéité (2) pour faire coïncider l'axe de visée avec celui (35) de l'orifice ; on remplace ensuite la lunette de visée par une source (5) émettrice d'un rayon lumineux, également axée sur le dispositif d'étanchéité et dirigée vers le banc (6) d'introduction de la sonde ; on place une mire (7) sur le chariot (61), centrée sur l'axe (62) de la sonde ; on déplace le chariot sur le banc et on règle la position dudit banc de façon que, quelle que soit la position du chariot sur le banc, le rayon lumineux atteigne la mire (7) en son centre.

2. Procédé selon la revendication 1, caractérisé en ce que l'organe d'obturation (21) étant fermé, on fixe la lunette de visée (1) de façon étanche sur le dispositif d'étanchéité (2) à son extrémité la plus éloignée du four, et en ce qu'on ouvre ensuite l'organe d'obturation pour effecteur la visée de l'orifice.

3. Procédé selon la revendication 1, caractérisé en ce que pour le réglage de la position du banc (6), on place le chariot (61) en premier lieu vers une extrémité du banc et on règle la position du banc en ce point, puis on fait de même à l'autre extrémité du banc, et enfin on effectue le réglage des points intermédiaires entre les deux extrémités.

4. Procédé selon la revendication 1, caractérisé en ce que la source de rayonnement lumineux (5) est une source laser.

5. Ensemble d'implantation d'une sonde pariétale (10) allongée rectiligne dans un four de fusion-réduction (4) tel qu'un haut-fourneau par un orifice (3) ménagé dans la paroi dudit four, cet ensemble comprenant :
- Un dispositif d'étanchéité (2) selon l'axe (26) duquel la sonde doit progresser pour pénétrer dans le four, et comportant un organe d'obturation (21) assurant l'étanchéité lorsque la sonde est retirée, et un organe d'étanchéité (22) assurant celle-ci lorsque la sonde est introduite,
- un châssis (41) fixé rigidement au four au voisinage de l'orifice (3) et supportant le dispositif d'étanchéité, et
- un banc (6) pourvu d'un chariot port-sonde (61) mobile en translation selon l'axe (62) de ladite sonde, ensemble caractérisé en ce qu'il comporte :
- des moyens (42) de réglage de la position du dispositif d'étanchéité (2) par rapport au châssis (41),
- des moyens (63) de réglage de la position du banc (6) et de son orientation, et
- des moyens (23,24,25) pur positionner et fixer temporairement sur, ou à proximité, du dispositif d'étanchéité (2) et coaxialement avec celui-ci, une lunette de visée (1) ou alternativement une source (5) de rayon lumineux.

6. Ensemble selon la revendication 5, caractérisé en ce que les moyens (42) de réglage du dispositif d'étanchéité (2) et les moyens (63) de réglage du banc (6) comportent des systèmes de réglage, permettant de régler la position d'un point de l'axe (26) du dispositif d'étanchéité (2) et de l'axe (62) du banc (6), à l'aplomb duquel ledit système est placé, dans une direction verticale et dans une direction horizontale sensiblement perpendiculairement audit axe (26,62).

7. Ensemble selon la revendication 6, caractérisé en ce que le dispositif d'étanchéité (2) est lié au châssis (41) par deux systèmes de réglage (42) espacés l'un de l'autre selon l'axe (26).

8. Ensemble selon la revendication 6, caractérisé en ce que le banc (6) est soutenu par au moins trois systèmes de réglage (63), un étant placé à chaque extrémité du banc.

9. Ensemble selon la revendication 5, caractérisé en ce que le banc (6) est solidarisé au châssis (41) par des attaches articulées (8) permettant de transmettre au blindage (45) du four l'effort de poussée pour la pénétration de la sonde auquel est soumis le banc, par l'intermédiaire dudit châssis (41).

10. Ensemble selon la revendication 6, caractérisé en ce que les moyens de réglage (42,63,83) comportent des systèmes à vis (43,64,81) agissant selon des directions orthogonales entre elles.

## Claims

1. Method of axially aligning an assembly for the introduction of a straight elongated parietal probe (10) into a reducing-smelting furnace (4), such as a blast furnace, via an orifice (3) in the wall of the said furnace, the introduction assembly comprising a sealing device (2), along the axis of which the probe is to penetrate into the furnace, the said sealing device being of adjustable position and having a closing-off member (21) ensuring sealing when the probe is removed, and a sealing member (22) ensuring sealing when the probe is being inserted, the introduction assembly also comprising a bed (6) for ensuring advance of the probe and the penetration of the latter into the furnace, this bed having means for the adjustment of height and inclination (63, 64) and carrying a probe-holder carriage (61) movable in terms of translational motion along the axis (62) of the said probe, characterized in that a sighting telescope (1) is placed on the sealing device (2) coaxially relative to the latter, in order to bring the axis (26) of the said device into coincidence with the sighting axis, the orifice (3) of the furnace (4) is sighted, the position of the sealing device (2) is adjusted in order to bring the sighting axis into coincidence with that (35) of the orifice, the sighting telescopes thereafter replaced by a light-beam emitting source (5) likewise aligned axially with the sealing device and directed towards the bed (6) for the introduction of the probe, a target (7) is placed on the carriage (61) and is centred on the axis (62) of the probe, the carriage is moved along on the bed, and the position of the said bed is adjusted in such a way that, whatever the position of the carriage on the bed, the light beam reaches the target (7) at its centre.

2. Method according to Claim 1, characterized in that, with the closing-off member (21) being closed, the sighting telescope (1) is fastened sealingly to the sealing device (2) at its end farthest from the furnace, and in that the closing-off member is subsequently opened in order to carry out the sighting of the orifice.

3. Method according to Claim 1, characterized in that, to adjust the position of the bed (6), the carriage (61) is first placed towards one end of the bed and the position of the bed is set at this point, then the same procedure is carried out at the other end of the bed, and finally the adjustment of the intermediate points between the two ends is made.

4. Method according to Claim 1, characterized in that the light-beam emitting source (5) is a laser source.

5. Assembly for the introduction of a straight elongated parietal probe (10) into a reducing-smelting furnace (4), such as a blast furnace, via an orifice (3) made in the wall of the said furnace, this assembly comprising,

– a sealing device (2), along the axis (26) of which the probe is to advance in order to penetrate into the furnace and which has a closing-off member (21) ensuring sealing when the probe is being removed and a sealing member (22) ensuring sealing when the probe is being inserted,

– a frame (41) fastened rigidly to the furnace in the vicinity of the orifice (3) and supporting the sealing device, and

– a bed (6) equipped with a probe-holder carriage (61) movable in terms of translational motion along the axis (62) of the said probe, the said assembly being characterized in that it comprises,

– means (42) for adjusting the position of the sealing device (2) in relation to the frame (41),

– means (63) for adjusting the position of the bed (6) and its orientation, and

– means (23, 24, 25) for temporarily positioning and fastening a sighting telescope (1) or alternatively a light-beam source (5) on or in the vicinity of the sealing device (2) and coaxially relative to this.

6. Assembly according to Claim 5, characterized in that the means (42) for adjusting the sealing device (2) and the means (63) for adjusting the bed (6) comprise adjusting systems making it possible to adjust the position of a point on the axis (26) of the sealing device (2) and on the axis (62) of the bed (6), vertically in line with which the said system is respectively placed, in a vertical direction and in a horizontal direction substantially perpendicular relative to the said axis (26, 62).

7. Assembly according to Claim 6, characterized in that the sealing device (2) is connected to the frame (41) by means of two adjusting systems (42) spaced from one another along the axis (26).

8. Assembly according to Claim 6, characterized in that the bed (6) is supported by at least three adjusting systems (63), one being located at each end of the bed.

9. Assembly according to Claim 5, characterized in that the bed (6) is fixed to the frame (41) by means of articulated fastenings (8), making it possible to transmit the thrust for the penetration of the probe, to which the bed is subjected, to the jacket (45) of the furnace by means of the said frame (41).

10. Assembly according to Claim 6, characterized in that the adjustment means (42, 63, 83) comprise screw systems (43, 64, 81) acting in directions orthogonal relative to one another.

**Patentansprüche**

1. Verfahren zur axialen Ausrichtung einer Implantationsanordnung für eine langgestreckte, geradlinige Umfangs- bzw. Wandungssonde (10) in einem Schmelz-Reduktionsofen (4) wie einem Hochofen durch eine Öffnung (3) in der Wand des genannten Ofens, wobei die Implantationsanordnung eine Dichtungseinrichtung (2) aufweist, entlang deren Achse die Sonde in den Ofen eindringen soll, wobei die genannte Dichtungseinrichtung in bezug auf Position einstellbar ist und ein Verschlußorgan (21), das die Dichtheit gewährleistet, wenn die Sonde zurückgezogen bzw. ausgefahren ist, und ein Dichtungsorgan (22) aufweist, das die Dichtheit beim Einführen der Sonde gewährleistet, und die Implantationsanordnung auch eine Bank bzw. ein Gestell (6) besitzt, um den Vorschub und das Eindringen der Sonde in den Ofen zu gewährleisten, welche Bank Einrichtungen (63, 64) zur Einstellung der Höhe und Neigung aufweist und ein Sondentrag- bzw.- fahrgestell (61) trägt, das in Translation entlang der Achse (62) der genannten Sonde bewegbar ist, dadurch gekennzeichnet, daß ein Ziel- bzw. Richtfernroh (1) auf der Dichtungseinrichtung (2) und koaxial mit derselben angebracht wird, um die Achse (26) der genannten Einrichtung mit der Visierachse zusammenfallen zu lassen; daß die Öffnung (3) des Ofens (4) anvisiert wird; daß die Position der Dichtungseinrichtung (2) eingestellt wird, um die Visierachse mit jener (35) der Öffnung zusammenfallen zu lassen; daß darauf das Ziel- bzw. Richtfernrohr durch eine Lichtstrahlenquelle (5) ersetzt wird, die ebenfalls in bezug auf die Achse der Dichtungseinrichtung ausgerichtet und auf die Bank (6) zum Einführen der Sonde ausgerichtet ist; daß eine Kimme bzw. ein Visiereinschnitt (7) auf das Gestell (61) aufgebracht und auf der Achse (62) der Sonde zentriert wird; daß das Fahrgestell auf der Bank verschoben und die Position der genannten Bank so eingestellt wird, daß ungeachtet der Position des Gestells auf der Bank der Lichtstrahl die Kimme bzw. den Visiereinschnitt (7) in seinem Mittelpunkt erreicht bzw. trifft.

2. Verfahren nach Anspruch 1, dadurch gekennzeichnet, daß bei geschlossenem Verschlußorgan (21) das Zielfernrohr (1) auf der Dichtungseinrichtung (2) dicht an ihrem am weitesten vom Ofen entfernten Ende befestigt wird und dann das Verschlußorgan geöffnet wird, um die Sicht auf die Öffnung freizugeben.

3. Verfahren nach Anspruch 1, dadurch gekennzeichnet, daß für die Einstellung der Position der Bank (6) das (Fahr-)Gestell (61) zuerst auf ein Ende der Bank zu bewegt wird und die Position der Bank in diesem Punkt eingestellt wird, dann dieser Vorgang mit dem anderen Ende der Bank wiederholt wird und schließlich die Zwischenpunkte zwischen den beiden Enden eingestellt werden.

4. Verfahren nach Anspruch 1, dadurch gekennzeichnet, daß die Lichtquelle (5) eine Laserlichtquelle ist.

5. Implantationsanordnung für eine langgestreckte, geradlinige Umfangs- bzw. Wandungssonde (10) in einem Schmelz-Reduktionsofen (4) wie einem Hochofen durch eine Öffnung (3), die in der Wand des genannten Ofens ausgebildet ist, wobei diese Anordnung umfaßt:

eine Dichtungeinrichtung (2), entlang deren Achse (26) die Sonde fortbewegbar ist, um in den Ofen einzudringen, welche Dichtungseinrichtung ein Verschlußorgan (21) umfaßt, das die Dichtheit gewährleistet, wenn die Sonde zurückgezogen bzw. ausgefahren ist und ein Dichtungsorgan (22) aufweist, das die Dichtheit bei Einführen der Sonde gewährleistet,

– ein (Trag-)Gestell (41), das starr am Ofen nahe der Öffnung (3) befestigt ist und die Dichtungseinrichtung abstützt, und

– eine Bank (6), die mit einem Sondentrag- bzw. -fahrgestell (61) versehen ist, das in Translation entlang der Achse (62) der genannten Sonde bewegbar ist, wobei die Anordnung gekennzeichnet ist durch:

– Einrichtungen (42) zur Einstellung der Position der Dichtungseinrichtung (2) in bezug auf das Gestell (41),

– Einrichtungen (63) zur Einstellung der Position der Bank (6) und ihrer Orientierung, und

– Einrichtungen (23, 24, 25), um auf oder nahe der Dichtungseinrichtung (2) und koaxial mit derselben ein Ziel- bzw. Richtfernrohr (1) oder alternativ eine Lichtstrahlenquelle (5) zu positionieren und zeitweise zu befestigen.

6. Anordnung nach Anspruch 5, dadurch gekennzeichnet, daß die Einrichtung (42) zur Einstellung der Dichtungseinrichtung (2) und die Einrichtungen (63) zur Einstellung der Bank (6) Einstellungssysteme umfassen, die die Einstellung der Position eines Punktes auf der Achse (26) der Dichtungseinrichtung (2) und auf der Achse (62) der Bank (6) zulassen, lotrecht zu welcher Bank das genannte System in vertikaler Richtung und in horizontaler Richtung im wesentlichen senkrecht zur genannten Achse (26, 62) in Stellung gebracht wird.

7. Anordnung nach Anspruch 1, dadurch gekennzeichnet, daß die Dichtungseinrichtung (2) mit dem Gestell (41) mittels zweier Einstellsysteme (42) verbunden ist, die im Abstand voneinander entlang der Achse (26) angeordnet sind.

8. Anordnung nach Anspruch 6, dadurch gekennzeichnet, daß die Bank (6) von wenigstens drei Einstellsystemen (63) abgestützt wird, wovon je eines an jedem Ende der Bank angeordnet ist.

9. Anordnung nach Anspruch 5, dadurch gekennzeichnet, daß die Bank (6) am Gestell (41) mittels Gelenkhalterungen (8) befestigt ist, die ermöglichen, daß auf die Panzerung (45) des Ofens die Schubkraft zum Eindringen der Sonde, der die Bank unterworfen ist, über das Gestell übertragen wird.

10. Anordnung nach Anspruch 6, dadurch gekennzeichnet, daß die Einstelleinrichtungen (42, 63, 83) Schraubsystsme (43, 64, 81) umfassen, die in orthogonalen Richtungen in bezug aufeinander wirken.

Fig. 1

Fig. 2

Fig. 3

Fig-4

Fig-5

Fig-6